# EUROPÄISCHE PATENTANMELDUNG

(11) **EP 2 078 648 A2**
(43) Veröffentlichungstag der Anmeldung: **15.07.2009**
(21) Anmeldenummer: 09150227.8
(22) Anmeldetag: 08.01.2009
(51) Int. Cl.: B60S 3/00, B60S 5/04

(54) **Servicestation**

(30) Priorität: 10.01.2008 DE 202008000404 U
(71) Anmelder: Polo Expressversand GmbH, 40589 Düsseldorf (DE)
(72) Erfinder: Lentzen, Petra, 47844 Willich (DE)
(74) Vertreter: Kluin, Jörg-Eden

(57) **Zusammenfassung**

Eine Servicestation (100), bei der in einer Einheit (1) mehrere Kraftfahrzeugsfahrer - Serviceelemente (2-9) zusammengefasst sind und diese Einheit (1) mobil ist.

## Beschreibung

Die Erfindung betrifft eine Servicestation für Kraftfahrzeugfahrer.

Es sind Serviceeinrichtungen bekannt, die beispielsweise Luft oder Wasser für Kraftfahrzeuge zur kostenlosen Selbstbedienung der Kraftfahrzeugfahrer bereitstellen. Die Einrichtungen befinden sich meist an Tankstellen, Raststellen oder Werkstätten und sind fest installiert oder mobil. In dem dazugehörenden Gebäude besteht meist die Möglichkeit zur Handreinigung.

Der Nachteil dieser Einrichtungen ist, dass, wenn sie fest installiert sind, aufwendige, platzraubende Installationen nötig sind und ihr Standort nachträglich nicht veränderbar ist. Der Nachteil bei mobilen Einrichtungen ist, dass jede einzeln gegen Diebstahl gesichert sein muss, oder einzeln nach Betriebsschluss in das Gebäude transportiert werden muss. Auch müssen Hausanschlüsse, etwa für Druckluft oder Wasser an geeigneter Stelle vorliegen, um die mobilen Einrichtungen, die meist nur kleine Betriebsstoffspeicher für wenige Benutzungen haben, komfortabel wieder befüllen zu können.

Nach der Nutzung der Serviceeinrichtungen besteht regelmäßig das Bedürfnis zum Reinigen der Hände. Wenn die Händewaschmöglichkeit in dem Gebäude untergebracht ist, ist es also erforderlich, dass der Nutzer sein Fahrzeug verlässt.

Dies ist insbesondere für Motorradfahrer unkomfortabel, da sie öfter alleine unterwegs sind, ihr Fahrzeug daher abschließen müssen und Gegenstände wie den Helm oder die Handschuhe sichern oder mit in das Gebäude nehmen müssen.

Die Erfindung hat es sich zur Aufgabe gemacht, eine Serviceeinrichtung zu schaffen, bei der die genannten Nachteile nicht bestehen.

Diese Aufgabe wird durch die in Anspruch 1 wiedergegebene Servicestation gelöst.

Bei der erfindungsgemäßen Servicestation sind mehrere Kraftfahrzeugfahrerserviceelemente zu einer mobilen Einheit zusammengefasst. (Unter einem Kraftfahrzeugfahrerserviceelement soll im Folgenden eine Einrichtung verstanden werden, die es dem Nutzer ermöglicht, eine der oft erforderlichen und ohne Fachwissen schnell durchzuführenden Reinigungs- und/oder Instandhaltungsarbeiten und/oder Betriebsstoffnachfüllarbeiten vorzunehmen, beispielsweise das Reifenbefüllen.) Hierdurch können eine Vielzahl von Serviceelementen platzsparend untergebracht werden. Der Nutzer kann an einer Stelle sämtliche Servicemöglichkeiten in Anspruch nehmen. Der Betreiber der Station muss nur eine Diebstahlsicherung anbringen oder kann sämtliche Serviceelemente auf einmal nach Geschäftsschluss in das Gebäude transportieren.

Die Servicestation ist vorzugsweise so ausgestaltet, dass die Betriebsstoffe in der Station gespeichert sind, die Druckluft in der Station erzeugt wird, und lediglich Elektrizität von außen zugeführt werden muss. Hierdurch ist es nicht mehr erforderlich, aufwendige Außeninstallationen anzubringen. Die Servicestation kann, abgesehen von einem nahezu immer vorhandenen und leicht durch Verlängerungskabel zugänglich zu machenden Elektrizitätsanschluss, weitgehend unabhängig von vorhandenen Anschlüssen eingesetzt werden. Ihr Standort kann leicht verändert und damit schrittweise optimiert werden.

Es kann auch ein Generator zur Stromerzeugung in der Servicestation vorgesehen sein, sodass sie vollständig autark ist. Es kann vorgesehen sein, dass der Generator automatisch startet, wenn der Druck in dem Druckbehälter des Kompressors einen bestimmten Wert unterschreitet. Es kann auch eine Energiespeicherung durch eine Batterie/ einen Akkumulator vorgesehen sein. Auch kann vorgesehen sein, die je nach Ausgestaltung der Servicestation unterschiedlichen Flüssigkeiten mit aus dem Druckbehälter des Kompressors bereitgestelltem Luftdruck zu transportieren/fördern. Der Druckbehälter des Kompressors kann bei dieser Ausführungsform als Energiespeicher für alle Energie benötigende Funktionen der Servicestation fungieren und ein lediglich gelegentliches Starten des Generators erlauben.

Vorzugsweise ist an der Servicestation auch die Möglichkeit zum Händewaschen vorgesehen. Hierdurch kann sich der Nutzer unmittelbar anschließend die Hände waschen, ohne dass er sein Fahrzeug verlassen muss. Er behält sein Fahrzeug samt etwaiger mitgeführter Gegenstände im Blick und muss keine Sicherungen gegen Diebstahl vornehmen. Insbesondere muss nicht mit schmutzigen Fingern nach dem Kraftfahrzeugschlüssel gesucht werden, um das Fahrzeug abzuschließen. Zum Zwecke der Handreinigung umfasst die Servicestation vorzugsweise einen Handseifenspender mit zugehörigem Seifenbehälter, einen Wasserhahn, ein Waschbecken, einen Tank für Frischwasser und einen Tank für Schmutzwasser.

Vorzugsweise ist auch mindestens ein spezielles Serviceelement für Motorräder oder/und Motorradfahrer vorgesehen. Da bei Motorradfahrern ein besonderes Bedürfnis besteht, ihr Kraftfahrzeug und Gegenstände wie Helm und Handschuhe nicht aus den Augen zu lassen, kommen die Vorteile der Erfindung hier besonders gut zur Geltung.

Die Servicestation umfasst als spezielles Motorradserviceelement vorzugsweise einen Visierreinigungsspender und einen Tank für Visierreinigungsmittel. In der bevorzugten Ausführungsform wird der Visierreiniger nach Betätigen eines Knopfes an der Serviceeinheit für wenige Sekunden aus einer an einem Schlauch befestigten Düse gesprüht. Hierdurch wird erreicht, dass nur relativ wenig Visierreiniger pro Benutzung entnommen wird und der Tank selten nachgefüllt werden muss. Handseife und Frischwasser werden aus dem gleichen Grund vorzugsweise auf gleiche Weise dosiert. Der Reiniger kann auch durch eine an dem Schlauchende vorgesehene Sprühpistole individuell zu dosieren sein.

Sowohl zum Händeabtrocknen, als auch zur Visierreinigung sind vorzugsweise ein Papierhandtuchspender und ein Mülleimer vorgesehen.

Die Servicestation umfasst weiter in der bevorzugten Ausführungsform einen Reifenluftdruckmesser- und Befüller sowie einen Kompressor. Es hat sich gezeigt, dass diese Ausstattung den gängigen Servicebedürfnissen von Motorradfahrern entspricht und gut in einer Einheit zusammenzufassen ist.

Reifenluftdruckmesser, Befüller und Luftdruckkompressor sind vorzugsweise so ausgestaltet, dass der gewünschte Druck voreingestellt werden kann und anschließend automatisch hergestellt wird.

Die Tanks für Wasser und Reinigungsmittel und die Papierhandtuchbevorratung können so groß vorgesehen sein, dass sie so viele Benutzungen erlauben, wie üblicherweise an einem Tag erfolgen. Somit ist es ausreichend, wenn die Servicestation morgens voll befüllt wird und sie stört nicht den Betriebsablauf des Geschäftes, das sie aufstellt.

Die Servicestation ist vorzugsweise mittels zweier Rollen an einer Seite und klappbaren Griffen an der anderen Seite schubkarrenartig transportierbar. Die Griffe befinden sich - besonders bevorzugt - am Ende von Rohrstücken, die im eingeklappten Zustand an einer senkrechten Seite der Servicestation anliegen und für den Transport in die Waagrechte hochgeklappt werden können. Der Kompressor ist als das schwerste Bauteil zur leichteren Transportierbarkeit vorzugsweise in der Nähe der Räder angeordnet.

Es können auch Griffe auf derselben Seite wie die Rollen angebracht sein, so dass sich eine sackkarrenartige Transportierbarkeit ergibt.

Auf diese Weise ist die Servicestation trotz ausreichend großer Betriebsstofftanks der Einzelelemente von einer Person komfortabel und kippsicher transportier- und abstellbar.

In den oder in der Nähe der Flüssigkeitstanks der Station kann mindestens eine elektrische Heizung vorgesehen sein, die bei Außentemperaturen unter Null Grad das Gefrieren der Flüssigkeiten verhindert. Die Heizung/Heizungen kann darüber hinaus das Handwaschwasser bei kalten Außentemperaturen auf eine komfortable Temperatur von beispielsweise 10 Grad Celsius erwärmen.

Es können Mittel vorgesehen sein, die das leicht auszuwechselnde Anbringen von Werbeträgern an und auf der Servicestation erlauben. Diese Mittel können ein senkrechtes Schild auf dem Rohrrahmen und eine Oberflächenbeschaffenheit der zu dem Nutzer weisenden Fläche der Servicestation und des Schildes umfassen, die ein einfaches Aufkleben und Wiederablösen von Plakaten erlaubt.

Die Erfindung soll nun anhand der beigefügten Zeichnungen weiter erläutert werden. Es zeigen:
- Fig. 1: eine perspektivische Ansicht der Vorderseite der erfindungsgemäßen Servicestation;

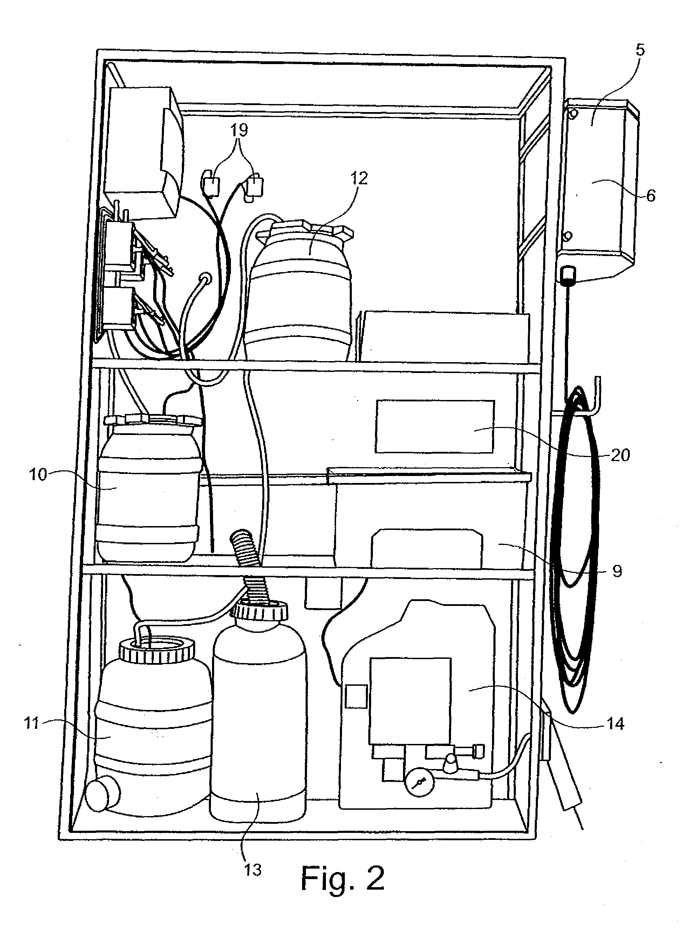

- Fig. 2: eine perspektivische Ansicht der Rückseite der erfindungsgemäßen Servicestation bei herausgenommener Rückwand;

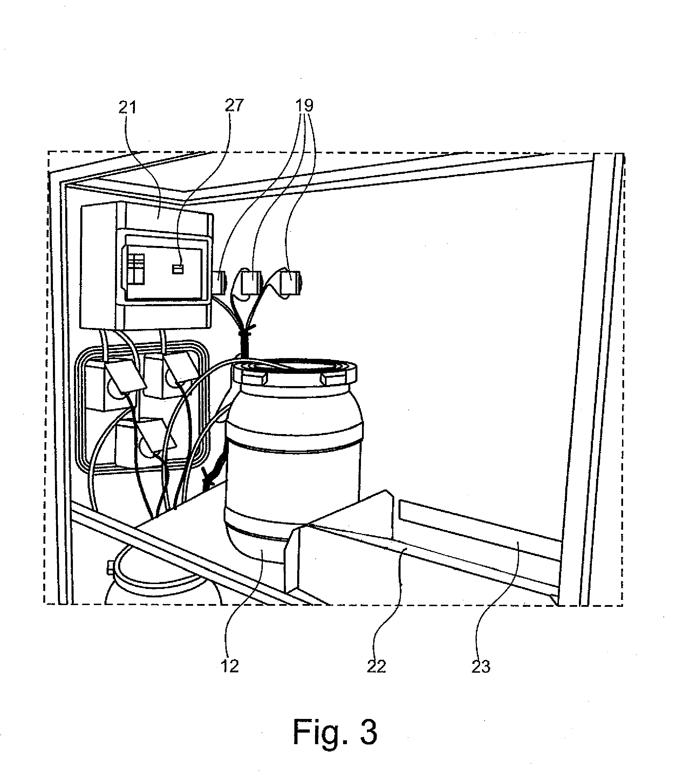

- Fig. 3: eine perspektivische Detailansicht des oberen Bereichs der Rückseite der erfindungsgemäßen Servicestation bei herausgenommener Rückwand;

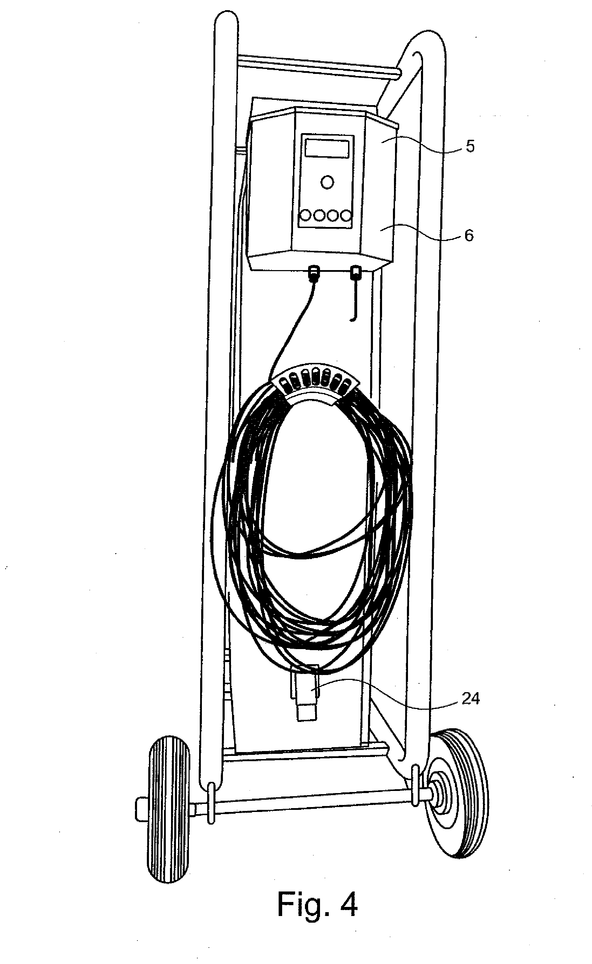

- Fig. 4: eine perspektivische Ansicht einer schmalen Seite der Servicestation;

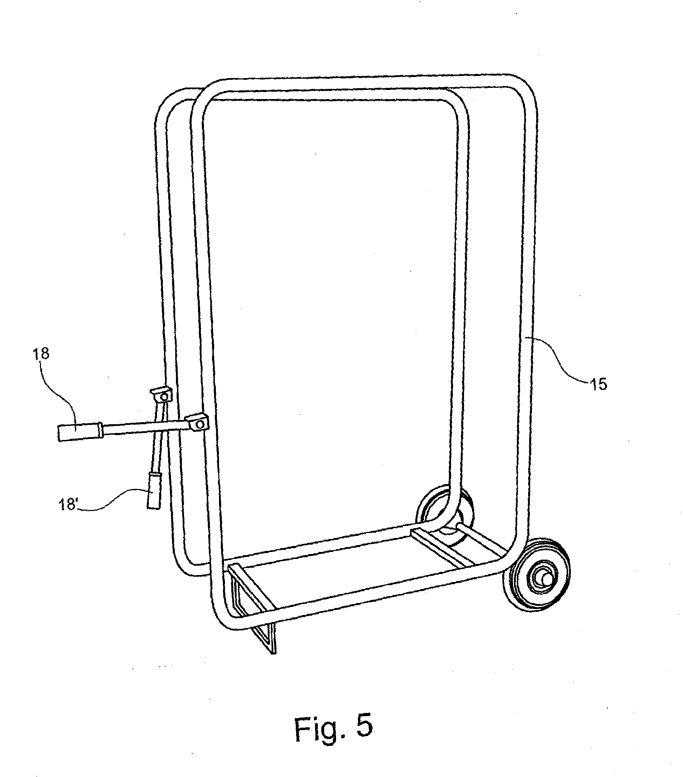

- Fig. 5: eine perspektivische Ansicht auf den Rohrrahmen ohne Serviceelemente - Einheit.

Die als Ganzes mit 100 bezeichnete Servicestation umfasst in der gezeigten Ausführungsform einen Rohrrahmen 15, der aus zwei etwa gleich großen Rechtecken mit abgerundeten Ecken besteht, die durch Streben zu einer quaderförmigen Form verbunden sind. Der Abstand der beiden Rohrrechtecke ist kürzer als die Kanten der Rohrrechtecke. Der Rohrrahmen 15 steht hochkant, die längsten Kanten des Quaders sind also senkrecht. An einer Seite des Bodens des Quaders befindet sich an beiden Ecken der Rohrrechtecke jeweils ein Rad 16,16'. Auf der den Rädern gegenüberliegende Seite des Bodens befindet sich ein Abstellbügel 25, der das gerade Abstellen der Servicestation 100 ermöglicht. Über diesem Abstellbügel befinden sich an beiden Rechtecken ausklappbare Griffe 18, 18'. Innerhalb des Rohrrahmens 15 befindet sich ein kleineres, im Wesentlichen geschlossenes und quaderförmiges Gehäuse 26, dessen Kanten zueinander etwa im gleichen Verhältnis stehen, wie die Kanten des Rohrrahmens 15 zueinander. Das Gehäuse 26 nimmt die eigentlichen Serviceelemente auf, so dass diese zu einer Einheit (1) zusammengefasst sind, und ist durch den Rohrrahmen 15 vor Stößen geschützt. Die Servicestation ist so aufgestellt, dass eine der beiden größten Flächen des Gehäuses 26 dem Benutzer zugewandt ist. An dieser Fläche befinden sich ein Waschbecken 8, ein Wasserhahn 4, ein Handseifenspender 3, ein Visierreinigungsmittelspender 2, ein Papierhandtuchspender 7, eine Einwurföffnung zu einem Mülleimer 9 und Bedienknöpfe 19. Auf Knopfdruck wird der Visierreiniger mittels flexiblem Schlauch auf das zu reinigende Objekt aufgesprüht. Mittels Papierhandtüchern wird das Visier gereinigt. An der schmalen Seitenfläche des inneren Quaders sind der Reifendruckmesser 5, und der Reifendruckbefüller 6 angebracht. Der Reifendruck wird mittels modernem Druckvorwahlgerät überprüft und automatisch korrigiert. Der Nutzer kann sich unmittelbar nach der Tätigkeit die Hände reinigen. Das Frischwasser und die Reinigungsflüssigkeiten werden mit elektrischen Pumpen gefördert, die im Inneren der jeweiligen Tanks angeordnet sind. Das Wasser und die Handseife werden in dem kleinen Handwaschbecken 8 aufgefangen und im Schmutzwassertank 13 im Innern der Servicestation gespeichert. Im Innern des Gehäuses 26 sind auch ineinander gefaltete Papierhandtücher vor einer Öffnung 23 auf einer Schräge 22 bevorratet. Die benutzen Papierhandtücher werden im eingebauten Mülleimer 9 entsorgt, der durch eine schwenkbare Klappe 20 verschlossen ist. Die Servicestation benötigt einen gewöhnlichen Stromanschluss (230 V). Sie ist mit einer für den Außengebrauch geeigneten Steckdose 24 ausgestattet, in die ein Verlängerungskabel eingesteckt wird. Die Servicestation verfügt über einen Sicherungskasten 21 mit Sicherungen und einem Fehlerstomschutzschalter (FI-Schalter).

Auf der Oberseite des Rohrrahmens 15 ist ein Schild mit Werbeträger 17 angebracht.

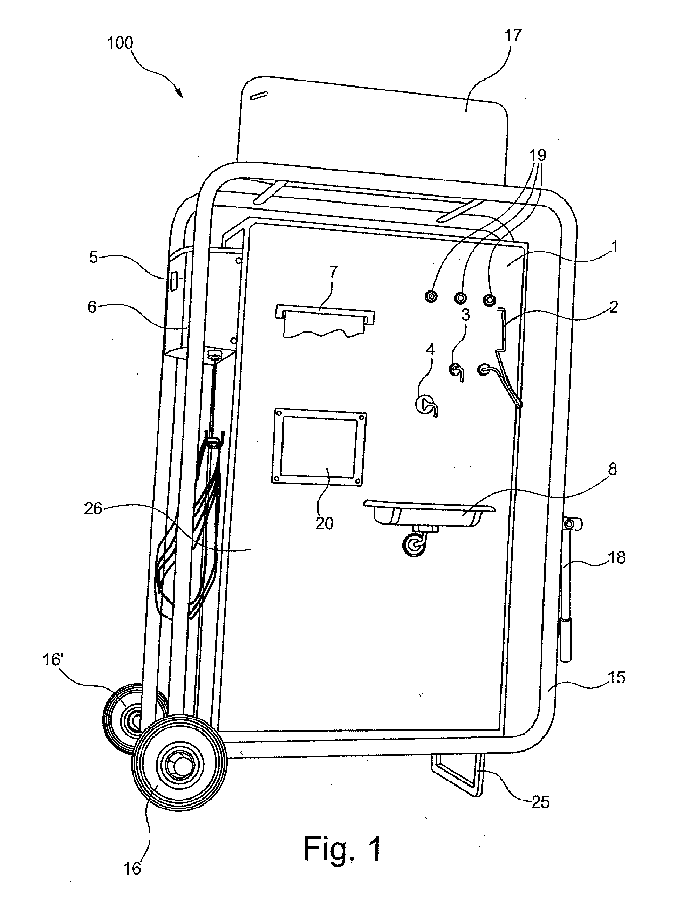

Im Inneren des Gehäuses 26 befinden sich von außen unsichtbar ein Wassertank 11, Schmutzwassertank 13, Handseifen- 12 und Visierreinigungstank 10, sowie ein Kompressor 14. Die Tanks sind in der Servicestation durch eine leicht zu lösende Befestigung gegen Verrutschen oder Kippen gesichert. Sie sind zur leichteren Befüllung herausnehmbar. Zur leichten Zugänglichkeit der Tanks ist die dem Betrachter von Fig. 1 abgewandte Rückseite des Gehäuses 26 mit einer die ganze Fläche überspannenden, abschließbaren Tür ausgestattet.

### Bezugszeichenliste:

- 100.: Servicestation
- 1.: Einheit der Serviceelemente
- 2.: Visierreinigungsmittelspender
- 3.: Handseifenspender
- 4.: Wasserhahn
- 5: Reifendruckmesser
- 6.: Reifendruckbefüller
- 7.: Papierhandtuchspender
- 8.: Waschbecken
- 9.: Mülleimer
- 10.: Tank für Visierreinigungsmittel
- 11.: Frischwassertank
- 12.: Tank für Handwaschseife
- 13.: Tank für Schmutzwasser
- 14.: Luftdruckkompressor
- 15.: Rohrrahmen
- 16,16'.: Rad
- 17.: Schild für Werbeträger
- 18,18'.: Griffe
- 19.: Betätigungsknöpfe für Frischwasser, Handseife und Visierreiniger
- 20.: Mülleimerklappe
- 21.: Sicherungskasten
- 22.: Schräge zur Aufnahme ineinander gefalteter Papierhandtücher
- 23.: Papierhandtuchöffnung
- 24.: Steckdose
- 25.: Abstellbügel
- 26.: Gehäuse
- 27.: Elektrische Sicherungen

## Patentansprüche

1. Servicestation (100), **dadurch gekennzeichnet, dass** in einer Einheit (1) mehrere Kraftfahrzeugsfahrer - Serviceelemente (2-9) zusammengefasst sind und diese Einheit (1) mobil ist.

2. Servicestation (100) nach Anspruch 1, **dadurch gekennzeichnet, dass** die Einheit (1) ausschließlich einen Elektrizitätsanschluss aufweist.

3. Servicestation (100) nach Anspruch 1 oder 2, **dadurch gekennzeichnet, dass** die Einheit (1) elektrische Sicherungen (27) und einen Fehlerstromschutzschalter umfasst.

4. Servicestation (100) nach einem oder mehreren der Ansprüche 1 bis 3, **dadurch gekennzeichnet, dass** die Betriebsstoffe der Serviceelemente (2-8) in Aufbewahrungsbehältern (7,10-13), der Einheit (1) gespeichert sind.

5. Servicestation (100) nach einem oder mehreren der Ansprüche 1 bis 4, **dadurch gekennzeichnet, dass** ein Luftdruckkompressor (14) in der Einheit (1) vorgesehen ist.

6. Servicestation (100) nach einem oder mehreren der Ansprüche 1 bis 5, **dadurch gekennzeichnet, dass** Mittel (3,4,8,11,12,13) zum Händewaschen in der Einheit (1) vorgesehen sind.

7. Servicestation (100) nach Anspruch 6, **dadurch gekennzeichnet, dass** die Mittel einen Handseifenspender (3) mit zugehörigem Tank (12), einen Wasserhahn (4), ein Waschbecken (8), einen Wassertank (11) und einen Tank für Schmutzwasser (13) umfassen.

8. Servicestation (100) nach einem oder mehreren der Ansprüche 1 bis 7, **dadurch gekennzeichnet, dass** mindestens eine spezielle Einrichtung (2,10) für Motorradfahrer vorgesehen ist.

9. Servicestation (100) nach Anspruch 8, **dadurch gekennzeichnet, dass** die spezielle Einrichtung (2,10) für Motorradfahrer einen Visierreinigungsmittelspender (2) und einen Tank für Visierreinigungsmittel (10) umfasst.

10. Servicestation (100) nach einem oder mehreren der Ansprüche 1 bis 9, **dadurch gekennzeichnet, dass** ein Papierhandtuchspender (7) und ein Mülleimer (9) vorgesehen sind.

11. Servicestation (100) nach einem oder mehreren der Ansprüche 1 bis 10, **dadurch gekennzeichnet, dass** ein Reifendruckmesser (5) und ein Reifendruckbefüller (6) vorgesehen sind.

12. Servicestation (100) nach einem oder mehreren der Ansprüche 1 bis 11, **dadurch gekennzeichnet dass** die Servicestation mindestens zwei Räder (16,16') umfasst.

13. Servicestation (100) nach Anspruch 12, **dadurch gekennzeichnet, dass** die Räder (16,16') an einer Seite des Rohrrahmens (15) angeordnet sind, so dass die Servicestation schubkarrenartig transportierbar ist.

14. Servicestation (100) nach einem oder mehreren der Ansprüche 1 bis 13, **dadurch gekennzeichnet, dass** auf der den Rädern (16,16') gegenüberliegenden Seite des Rohrrahmens (15) Griffe (18,18') vorgesehen sind.

15. Servicestation (100) nach Anspruch 14, **dadurch gekennzeichnet, dass** die Griffe (18,18') zwischen einer etwa senkrechten und einer etwa waagrechten Ausrichtung klappbar vorgesehen sind.
